# EUROPEAN PATENT APPLICATION

(11) **EP 4 309 757 A1**
(43) Date of publication of application: **24.01.2024**
(21) Application number: 22185678.4
(22) Date of filing: 19.07.2022
(51) Int. Cl.: B01D 19/00

(54) **DEGASSING DEVICE FOR EXTRACTING A GAS FROM A VISCOUS FLUID, AND DEGASSING METHOD**

(71) Applicant: Covestro Deutschland AG, 51373 Leverkusen (DE)
(72) Inventor: JEANTIN, Philippe, 26300 Alixan (FR); THOMASSON, Herve, 38200 Seyssuel (FR); PINCOT, Maxime, 26000 Valence (FR)
(74) Representative: Levpat

(57) **Abstract**

The invention concerns a degassing device (1) comprising a main vessel (30) comprising a main surface of degassing (s30), a secondary wall (50) disposed inside the main vessel (30) and comprising a secondary surface of degassing (s50); a main rotating plate (40) comprising a main reception surface (s40) configured to eject an initial viscous fluid to the main surface of degassing (s30); a secondary rotating plate (60) comprising a secondary reception surface (s60) configured to eject the initial viscous fluid to the secondary surface of degassing (s50), the main surface of degassing (s30) being configured to allow the formation of a main thin film (37) of initial viscous fluid, and the secondary surface of degassing (s50) being configured to allow the formation of a secondary thin film (57), said formation of the main thin film (37) and the secondary thin film (57) allowing the extraction of a gas from the initial viscous fluid.

## Description

### TECHNICAL FIELD OF THE INVENTION

This invention relates to the field of degassing device used for extracting a gas from a viscous fluid. Said degassing device being able to continuously degas various chemicals in order, for example, to feed a low-pressure dispensing machine for processing elastomers.

This invention also relates to the field of degassing method for extracting a gas from a viscous fluid.

### BACKGROUND

In the polymer industry, the component of thermoset polymers and in particular solid polyurethane elastomers need to be free of bubbles or dissolved gas, which may create large bubbles and defects during manufacturing steps when said manufacturing steps involve exothermic reactions.

It is known from the state of the art to make use of moulders to perform gas extraction from thermoset polymers. Moulders have various methods to remove gas, and a very common one is to degas in the tanks of the meter-mix or casting machine by placing the tank under vacuum during a couple of hours, depending upon the type of chemical and the tank size. Therefore, it is known to equip moulders with at least one vacuum apparatus to perform such extraction.

Another efficient and industrial solution to degas a chemical component is to use a continuous degasser, which is sucking the product from the container (drum, intermediate bulk container "IBC", etc.), degassing it on the fly and sending it to the machine. The temperature of the product is controlled during this process both to get an acceptable viscosity, and also (for temperature sensitive chemicals) to manage the temperature to avoid overheating the product.

More precisely, it is known to use an efficient type of equipment, which is a thin film degasser. One of the preferred arrangement consist in allowing the product to fall onto a rotating disk, thereby spreading it evenly on the inner wall of a vessel placed under vacuum. The thin film of material is going down along the heated vessel inner wall, and gas and / or bubbles are removed.

One key parameter of this apparatus is the inner surface covered by the film, directly limiting the maximum flow rate to be degassed for a given chemical and viscosity. Thus, the overall output of this type of apparatus is limited by the inner surface covered by the film. Enlarging the overall inner surface of the apparatus should help to improve the flow rate of fluid to be degassed, but it will cause enlargement of the apparatus, increasing by this way the footprint of the machine. Another solution is to use a more complex structure for the inner surface. However, such solution could raise cleaning issues. Indeed, complex structures are extremely difficult to clean, which is particularly damaging especially if the reactive product is polymerized, or if a change of chemicals is needed.

### SUMMARY OF THE INVENTION

The present invention aims at solving the aforementioned problems. To this end, the invention concerns a degassing device configured to extract a gas from an initial viscous fluid to be degassed, the degassing device comprising:
- a main shaft extending along a rotation axis and configured to be rotated around said rotation axis;
- at least one movement actuator ensuring a rotational movement of said main shaft around the rotation axis;
- a main vessel surrounding the main shaft, and comprising a main surface of degassing arranged around the main shaft and facing the main shaft, the main vessel delimiting internally a main volume, and comprising at least one main admission opening configured to allow the initial viscous fluid to be introduced into the main volume from outside the main volume;
- a secondary wall disposed inside the main vessel and comprising a secondary surface of degassing arranged around the main shaft, the secondary wall being disposed between the main surface of degassing and the main shaft, and the secondary surface of degassing facing the main shaft, the secondary wall delimiting internally a secondary volume fluidly communicating with the rest of the main volume;
- a main rotating plate disposed inside the main volume, and being integral in rotation with the main shaft, the main rotating plate comprising a main reception surface configured to receive all or part of the initial viscous fluid, the main rotating plate being configured to eject by centrifugal force the initial viscous fluid from the main reception surface to the main surface of degassing when said main rotating plate is driven in a rotational movement around the rotation axis;
- a secondary rotating plate disposed at least partially inside the secondary volume, and being integral in rotation with the main shaft, the secondary rotating plate comprising a secondary reception surface configured to receive all or part of the initial viscous fluid, the secondary rotating plate being configured to eject by centrifugal force the initial viscous fluid from the secondary reception surface to the secondary surface of degassing when said secondary rotating plate is driven in a rotational movement around the rotation axis,
the main surface of degassing being configured to allow the formation of a main thin film of initial viscous fluid when said initial viscous fluid flows by simple gravity along said main surface of degassing, and
the secondary surface of degassing being configured to allow the formation of a secondary thin film of initial viscous fluid when said initial viscous fluid flows by simple gravity along said secondary surface of degassing,
said formation of the main thin film of initial viscous fluid and said formation of the secondary thin film of initial viscous fluid allowing the extraction of the gas from the initial viscous fluid, so as to form a processed viscous fluid.

The arrangements described above allows to propose a degassing device adapted to degas a viscous fluid with a much higher output capacity compared to a device showing similar external volume.

It is well understood that the secondary wall split the main volume in a first volume and the secondary volume, the first volume corresponding to the main volume devoid of the secondary volume.

According to an embodiment, the degassing device comprises on or more of the following features, taken alone or in combination.

According to one embodiment, the main vessel is a closed enclosure, and the secondary wall is an opened enclosure fluidly communicating with the main vessel.

According to one embodiment, the secondary volume fluidly communicates with the main volume at least through a communication opening.

According to one embodiment, the secondary wall is included in the main vessel.

According to one embodiment, the secondary volume is included in the main volume.

According to one embodiment, the main rotating plate is disposed above the secondary wall compared to the direction of gravity.

According to one embodiment, the main surface of degassing delimits at least partially the main volume.

According to one embodiment, the main reception surface and/or the secondary reception surface is directed in a direction opposite to that of universal gravity.

According to one embodiment, the main rotating plate is disposed above the secondary rotating plate in the direction of universal gravity.

According to one embodiment, the secondary reception surface is parallel to the main reception surface.

According to one embodiment, the main vessel and/or the secondary wall comprise(s) steel.

According to one embodiment, the main volume of the main vessel is comprised between 80L and 500L.

According to one embodiment, the main surface of degassing is comprised between 0.5 m² and 2.5 m².

According to one embodiment, a surface ratio of an area of the secondary surface of degassing divided by an area of the main surface of degassing is comprised between 0,8 and 0,95.

According to one embodiment, the degassing device comprises a vacuum unit configured to place the main volume of the main vessel under vacuum.

According to one embodiment, the vacuum unit is also configured to place the secondary volume of the secondary wall under vacuum.

By "under vacuum" is meant that an internal pressure reigning inside the main volume is decreased by the vacuum unit until said internal pressure is below a threshold pressure. For example, the threshold pressure is comprised between 3 mbar and 40 mbar absolute.

Advantageously, placing the main volume and the secondary volume under vacuum allows a better extraction of gas when the viscous fluid is flowing by simple gravity along the main surface of degassing and along the secondary surface of degassing.

According to one embodiment, the at least one main admission opening of the main vessel comprises:
- a first admission opening coupled to a first admission pipe, said first admission pipe being configured to introduce at least part of the initial viscous fluid at the main reception surface of the main rotating plate; and
- a second admission opening coupled to a second admission pipe, said second admission pipe being configured to introduce at least part of the initial viscous fluid at the secondary reception surface of the secondary rotating plate.

Advantageously, said first admission pipe and second admission pipe allow introducing the viscous fluid respectively at the main rotating plate and the secondary rotating plate in order to increase the general flux of viscous fluid to be degassed by the degassing device. The overall output of the degassing device is increased accordingly.

According to one embodiment, at least one surface chosen between the main surface of degassing and the secondary surface of degassing is in the form of all or part of a cylindrical surface.

Advantageously, providing a main surface of degassing and/or a secondary surface of degassing with a cylindrical shape allows simplifying the overall structure of the degassing device. Besides, simple surfaces are easier to clean. Indeed complex degassing surfaces are extremely difficult to clean if the reactive product is polymerized, or if a change viscous fluid to be degassed is needed.

By "cylindrical surface" is meant a surface generated by a straight line, called generatrix, which moves in a given direction by resting parallel to itself and always passing through a closed curved line called directrix. In the present case, the directrix corresponds to the profile of the cutting section of the main vessel or the cutting section of the secondary wall, viewed perpendicular to the rotation axis, and the generatrix is a straight line parallel to the rotation axis.

In other words, at least one surface chosen between the main surface of degassing and the secondary surface of degassing is included in a cylindrical surface formed by a generatrix, which is parallel to the rotation axis, and by a circular directrix.

According to one embodiment, the main vessel comprises a cylindrical main side wall including the main degassing surface.

According to one embodiment, the secondary wall comprises a cylindrical secondary side wall including the secondary degassing surface.

According to one embodiment, the directrix of the main surface of degassing is a circle presenting a main radius.

According to one embodiment, the directrix of the secondary degassing surface is a circle presenting a secondary radius, said secondary radius being strictly inferior to the main radius.

According to one embodiment, at least one plate chosen between the main rotating plate and the secondary rotating plate is a rotating disc.

Advantageously, using rotating disc allows to guarantee a uniform ejection of the viscous fluid from the main or secondary reception surface to the main or secondary degassing surface by centrifugal force.

According to one embodiment, the main rotating plate is a rotating disc presenting a main disc radius. For example, the main disc radius is strictly inferior to the main radius.

According to one embodiment, the main disc radius is strictly comprised between the main radius and the secondary radius.

According to one embodiment, the secondary rotating plate is a rotating disc presenting a secondary disc radius, said secondary disc radius being strictly inferior to the main disc radius.

According to one embodiment, the secondary disc radius is strictly inferior to the secondary radius.

According to one embodiment, the main volume delimited by the main vessel comprises a buffer volume, fluidly communicating with the secondary volume delimited by the secondary wall, said buffer volume corresponding to a volume disposed below the main surface of degassing and the secondary surface of degassing with respect with gravity, and being configured to receive the processed viscous fluid after the flowing of the initial viscous fluid along the main surface of degassing or along the secondary surface of degassing.

Thus, the buffer volume allows to recover a volume of processed viscous fluid.

According to one embodiment, the degassing device comprises a level sensor configured to determine the volume of processed viscous fluid present in the buffer volume. Thus, it is possible to manage the amount of processed viscous fluid.

According to one embodiment, the degassing device comprises a stirring unit disposed at the level of the buffer volume and configured to stir at least part of the processed viscous fluid present in the buffer volume.

The arrangement described above allows to maintain the processed viscous fluid agitated. As a result, the processed viscous fluid can keep an homogeneous temperature, and can stay homogeneous, it is thus possible to prevent phenomena related to settling. Besides, agitating the processed viscous fluid allows most portions of said processed viscous fluid to reach the surface in order to be exposed to the vacuum present in the main volume, allowing by this way to maintain a permanent degassing.

According to one embodiment, the stirring unit comprises stirring fins, preferably being integral in rotation with the main shaft.

According to one embodiment, the main vessel comprises an evacuation opening disposed at the level of the buffer volume.

According to one embodiment, the degassing device comprises an extraction organ presenting an extraction end, said extraction end being fluidly communicating with the evacuation opening, said extraction organ being configured to allow the evacuation of the processed viscous fluid from the buffer volume to outside the main volume.

According to one embodiment, the extraction organ is fluidly communicating at an evacuation end opposite to the extraction end to a valve, said valve being configured to be switched between an evacuation state where the valve is configured to allow the evacuation of the processed viscous fluid to outside the degassing device, and a recirculation state where the valve allows the processed viscous fluid to flow to the at least one main admission opening, so that the processed viscous fluid serves as initial viscous fluid.

According one embodiment, the valve comprises a pneumatic membrane or a spring configured to allow the processed viscous fluid to emerge to the outside of the degassing device when an external pipe connected to the valve is open, and to ensure the recirculation of the processed viscous fluid towards the admission opening when said external pipe is closed.

As a result, the degassing device allows to make several round of degassing by introducing successively the viscous fluid in the at least one main admission opening.

According to one embodiment, the evacuation opening is configured to allow the evacuation of the processed viscous fluid to the extraction organ. In other words, the extraction organ is fluidly connected to the buffer volume through the evacuation opening.

According to one embodiment, the at least one main admission opening comprises at least one recirculation opening distinct from the first admission opening, and from the second admission opening, the valve being configured to allow the processed viscous fluid to flow to the at least one recirculation opening when the valve is in the recirculation state.

According to one embodiment, the evacuation opening is configured to allow the evacuation of the processed viscous fluid to an external apparatus, for example to feed a low pressure dispensing machine for processing polyurethane or other thermoset polymers.

According to one embodiment, the valve is a servo valve configured to control a flux of processed viscous fluid evacuated from the buffer volume to the extraction organ.

Advantageously, the servo valve allows to limit the inlet flow rate when using an initial viscous fluid showing low viscosity, and to adapt the flow rate to the output demand compared to a valve presenting only open or close valve position.

According to one embodiment, the initial viscous fluid comprises a thermoset plastic component, and preferentially a polyurethane elastomer component.

Consequently, the processed viscous fluid comprises said elastomer component, being preferentially a polyurethane component.

According to one embodiment, the degassing device comprises a heating unit configured to heat the main vessel at a degassing temperature, in order to place the main degassing surface at said degassing temperature.

The arrangement described above allows improving the degassing capacity of the main degassing surface.

According to one embodiment, the heating unit comprises electric heating cables or a jacket to form a jacketed main vessel.

According to one embodiment, the heating unit is configured to allow a heating fluid or a cooling fluid to exchange calories with the main vessel in order to control the temperature of the main surface of degassing and/or of the secondary surface of degassing.

According to one embodiment, the degassing temperature is dependent on the viscosity of the fluid to be degassed, and can for example be comprised between 20 °C and 100 °C.

According to one embodiment, the main vessel and the secondary wall are secured with each other via fixing elements.

Thus, it is possible to have a degassing device showing improved robustness.

According to one embodiment, the fixing elements comprise a plurality of spacers including a heat-conducting material, the fixing elements being configured to allow an exchange of calories between the main vessel and the secondary wall.

It is well understood that the fixing elements allows to place the secondary volume at the degassing temperature when the main vessel is heated by the heating unit. Thus, it is possible to heat more quickly the main vessel and the secondary wall, and especially the main surface of degassing and the secondary surface of degassing to improve degassing of the initial viscous fluid.

According to one embodiment, the fixing elements includes vertical plates.

According to one embodiment, the fixing elements includes fixing rods.

Advantageously, using fixing rods as fixing elements allows to secure the secondary wall with the main vessel with disturbing too much the flow of initial viscous fluid along the main surface of degassing.

According to one embodiment, the fixing elements are fixed between the main surface of degassing and an external surface of the secondary wall.

According to one embodiment, the degassing device comprises a plurality of secondary walls, and a plurality of secondary rotating plates, each secondary wall of the plurality of secondary walls comprising a secondary surface of degassing arranged around the main shaft and disposed between the main surface of degassing and the main shaft, and delimiting internally a secondary volume fluidly communicating with the main volume; and
each secondary rotating plate of the plurality of secondary rotating plates being associated with one secondary wall of the plurality of secondary walls in a way that said secondary rotating plate is disposed at least partially inside the secondary volume of the associated secondary wall, each secondary rotating plate of the plurality of secondary rotating plates being rotatably mounted on the main shaft, and being integral in rotation with the main shaft, and comprising a secondary reception surface configured to receive all or part of the initial viscous fluid,
each secondary rotating plate of the plurality of secondary rotating plates being configured to eject by centrifugal force the initial viscous fluid from the secondary reception surface to the secondary surface of degassing of the associated secondary wall when said secondary rotating plate is driven in a rotational movement around the axis of rotation.

In other words, the plurality of secondary walls are arranged one inside the other, so as to form trundle walls.

According to one embodiment, each secondary wall is associated with a secondary rotating plate disposed integrally inside the secondary volume of each secondary wall.

Depending on the application, the initial viscous fluid may present different range of viscosity. According to a first variant, the initial viscous fluid presents a viscosity comprised between 50 mPa·s to 200 mPa·s at 25 °C. According to a second variant related to the field of polyurethane elastomer molding, the initial viscous fluid presents a viscosity comprised between 500 mPa·s and 5000 mPa·s at 60 °C, and more particularly between 800 mPa·s and 3500 mPa·s at 60 °C.

The object of the invention may also be achieved by implementing a degassing method for extracting a gas from an initial viscous fluid, the method comprising the steps of:
- providing a degassing device of the type of one of those previously described;
- providing an initial viscous fluid at the level of the at least one main admission opening, in a way to allow to deposit all or part of the initial viscous fluid on the main reception surface of the main rotating plate, and to deposit all or part of the initial viscous fluid on the secondary reception surface of the secondary rotating plate;

- rotating the main shaft around the rotation axis so as to rotate both the main rotating plate and the secondary rotating plate, in order to provoke the ejection by centrifugal force of the initial viscous fluid deposited on the main reception surface from said main reception surface to the main surface of degassing, and in order to provoke simultaneously the ejection by centrifugal force of the initial viscous fluid deposited on the secondary reception surface from said secondary reception surface to the secondary surface of degassing;
- degassing the initial viscous fluid by extracting a gas from the initial viscous fluid during the formation of at least one thin film of initial viscous fluid, said at least one thin film of initial viscous fluid being formed by flowing the initial viscous fluid by simple gravity along said main or secondary surface of degassing, so as to form a processed viscous fluid.

The arrangements described above allows to propose a degassing method adapted to degas a viscous fluid with a high output capacity.

According to an embodiment, the degassing method comprises on or more of the following features, taken alone or in combination.

According to one embodiment, the degassing method comprises a vacuum step, wherein the vacuum unit places the main volume of the main vessel under vacuum. For example, the vacuum step is performed before or during the degassing step.

According to one embodiment, the degassing method comprises a stirring step wherein all or part of the processed viscous fluid is stirred, for example by a stirring unit.

According to one embodiment, the step of rotating the main shaft comprises the stirring step.

According to one embodiment, the step of rotating the main shaft comprises rotating the main rotating plate, the secondary rotating plate, and the stirring unit at the same time.

According to one embodiment, the step of rotating the main shaft is performed at a rotation speed comprised between 100 rpm and 1500 rpm, and more particularly between 100 rpm and 550 rpm.

According to one embodiment, the initial viscous fluid is the only fluid inserted through the main admission opening. Thus, it is possible to avoid any chemical reaction of the initial viscous fluid with another fluid in the main volume of the main vessel.

According to an embodiment, the degassing method comprises further a step of recirculation, wherein the processed viscous fluid is received on a buffer volume included in the main volume, and wherein all or part of said processed viscous fluid received inside the buffer volume is brought from the buffer volume to the at least one main admission opening in order to be provided as initial viscous fluid during the step of providing the initial viscous fluid.

According to one embodiment wherein the main vessel comprises an evacuation opening configured to allow the evacuation of the processed viscous fluid from the buffer volume to outside the main volume, and wherein the evacuation opening is provided with a servo valve, the step of recirculation comprises further a flow control step, wherein the servo valve is piloted so as to control a the flux of processed viscous fluid evacuated from the buffer volume to the extraction organ.

According to one embodiment, the degassing method comprises a heating step, wherein the heating unit heats the main vessel at a degassing temperature, in order to place the main degassing surface at said degassing temperature. For example, the heating step is performed before or during the degassing step.

### BRIEF DESCRIPTION OF THE DRAWINGS

The invention will be better-understood thanks to the detailed specification hereinafter, which describes several embodiments of the invention as examples and based on the following figures.
[Fig. 1] Figure 1 represents schematically a degassing device according to one embodiment.
[Fig. 2] Figure 2 represents schematically a cross-section of a degassing device according to one embodiment.
[Fig. 3] Figure 3 represents schematically, a degassing method according to one embodiment.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

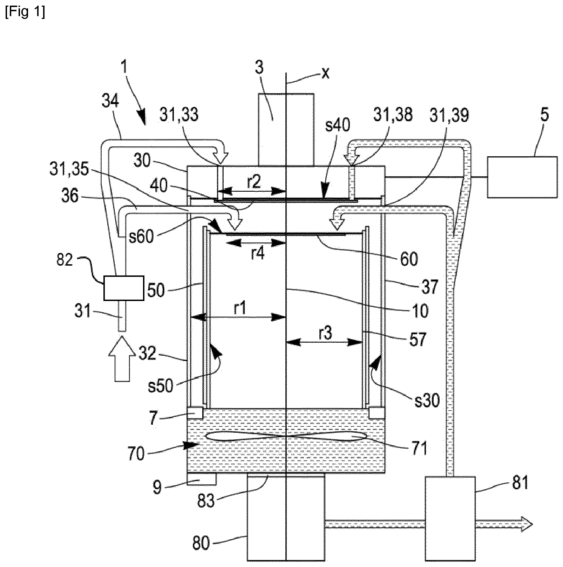

As illustrated on figure 1, the invention relates to a degassing device 1 configured to extract a gas from an initial viscous fluid to be degassed. The partially or totally degassed viscous fluid will be called processed viscous fluid in the rest of the description. According to one non-limiting embodiment, the initial viscous fluid comprises an thermoset plastic component, such as a polyurethane elastomer component. Consequently, the processed viscous fluid comprises said elastomer component, being preferentially a polyurethane component. Depending on the application, the initial viscous fluid may present different range of viscosity. According to a first variant, the initial viscous fluid presents a viscosity comprised between 50 mPa·s to 200 mPa·s at 25 °C. According to a second variant related to the field of polyurethane elastomer molding, the initial viscous fluid presents a viscosity comprised between 500 mPa·s and 5000 mPa·s at 60 °C, and more particularly between 800 mPa·s and 3500 mPa·s at 60 °C.

First, the degassing device 1 comprises a main shaft 10 extending along a rotation axis noted "X", and being configured to be rotated around said rotation axis X. The degassing device 1 comprises also at least one movement actuator 3 ensuring a rotational movement of said main shaft 10 around the rotation axis X. The rotation axis X may be noticeably vertical, that is to say relatively parallel the direction of gravity.

The degassing device 1 comprises further a main vessel 30, for example comprising steel, surrounding the main shaft 10, and comprising a main surface of degassing s30 arranged around the main shaft 10 and facing the main shaft 10. The main vessel 30 delimits internally a main volume generally comprised between 80L and 500L. Since the main surface of degassing s30 is facing the main shaft 10, the main surface of degassing s30 may delimits at least partially the main volume. The main vessel 30 comprises at least one main admission opening 31 configured to allow the initial viscous fluid to be introduced into the main volume from outside the main volume. The main surface of degassing s30 can be comprised between 0.5 m² and 2.5 m², and is configured to allow the formation of a main thin film 37 of initial viscous fluid when said initial viscous fluid flows by simple gravity along said main surface of degassing s30. The formation of the main thin film 37 of initial viscous fluid allows the extraction of the gas from the initial viscous fluid, so as to form a processed viscous fluid.

The degassing device 1 further comprises a secondary wall 50 disposed inside the main vessel 30 and comprising a secondary surface of degassing s50 arranged around the main shaft 10. The secondary wall may comprise steel. As illustrated on figure 1, the main vessel 30 is a closed enclosure, and the secondary wall 50 is an opened enclosure fluidly communicating with the main vessel 30 for example through a communication opening. The secondary wall 50 is disposed between the main surface of degassing s30 and the main shaft 10, and the secondary surface of degassing s50 is facing the main shaft 10. The secondary wall 50 delimits internally a secondary volume, which is fluidly communicating with the rest of the main volume. It is well understood that the secondary wall 50 split the main volume in a first volume and the secondary volume, the first volume corresponding to the main volume devoid of the secondary volume, and the secondary volume is included in the main volume.

At least one surface chosen between the main surface of degassing s30 and the secondary surface of degassing s50 is in the form of all or part of a cylindrical surface. Figure 1 illustrates a variant where both the main surface of degassing s30 and the secondary surface of degassing s50 are in the form of all or part of a cylindrical surface. More particularly, the main vessel 30 comprises a cylindrical main side wall 32 including the main degassing surface s30. By "cylindrical surface" is meant a surface generated by a straight line, called generatrix, which moves in a given direction by resting parallel to itself and always passing through a closed curved line called directrix. In the present case, the directrix corresponds to the profile of the cutting section of the main vessel 30 or the cutting section of the secondary wall 50, viewed perpendicular to the rotation axis X, and the generatrix is a straight line parallel to the rotation axis X. In other words, at least one surface chosen between the main surface of degassing s30 and the secondary surface of degassing s50 is included in a cylindrical surface formed by a generatrix, which is parallel to the rotation axis X, and by a circular directrix. According to the variant illustrated on figure 1, the directrix of the main surface of degassing s30 is a circle presenting a main radius r1, and the directrix of the secondary degassing surface is a circle presenting a secondary radius r3, said secondary radius r3 being strictly inferior to the main radius r1. Advantageously, providing a main surface of degassing s30 and/or a secondary surface of degassing s50 with a cylindrical shape allows simplifying the overall structure of the degassing device 1. Besides, simple surfaces are easier to clean. Indeed complex degassing surfaces are extremely difficult to clean if the reactive product is polymerized, or if a change of viscous fluid to be degassed is needed. It is possible that a surface ratio of an area of the secondary surface of degassing s50 divided by an area of the main surface of degassing s30 is comprised between 0,8 and 0,95.

Whatever geometry is chosen for the secondary surface of degassing s50, it is configured to allow the formation of a secondary thin film 57 of initial viscous fluid when said initial viscous fluid flows by simple gravity along said secondary surface of degassing s50. As a result, the formation of the main thin film 37 of initial viscous fluid and the formation of the secondary thin film 57 of initial viscous fluid allows the extraction of the gas from the initial viscous fluid, so as to form a processed viscous fluid.

The degassing device 1 may also comprises a vacuum unit 5 configured to place the main volume of the main vessel 30 under vacuum. Since there is generally a fluidic communication between the main volume and the secondary volume, the vacuum unit 5 is also configured to place the secondary volume defined at least partially by the secondary wall 50 under vacuum. By "under vacuum" is meant that an internal pressure reigning inside the main volume is decreased by the vacuum unit 5 until said internal pressure is below a threshold pressure. For example, the threshold pressure is comprised between 3 mbar and 40 mbar absolute. Advantageously, placing the main volume and the secondary volume under vacuum allows a better extraction of gas when the viscous fluid is flowing by simple gravity along the main surface of degassing s30 and along the secondary surface of degassing s50.

The degassing device 1 may further comprise a heating unit 9 configured to heat the main vessel 30 at a degassing temperature, in order to place the main degassing surface at said degassing temperature. For example, the heating unit 9 comprises electric heating cables or a jacket to form a jacketed main vessel 30. The heating unit 9 can therefore be configured to allow a heating fluid or a cooling fluid to exchange calories with the main vessel 30 in order to control the temperature of the main surface of degassing s30 and/or of the secondary surface of degassing s50. Generally, the degassing temperature is dependent on the viscosity of the fluid to be degassed, and can for example be comprised between 20 °C and 100 °C. The arrangement described above allows improving the degassing capacity of the main degassing surface.

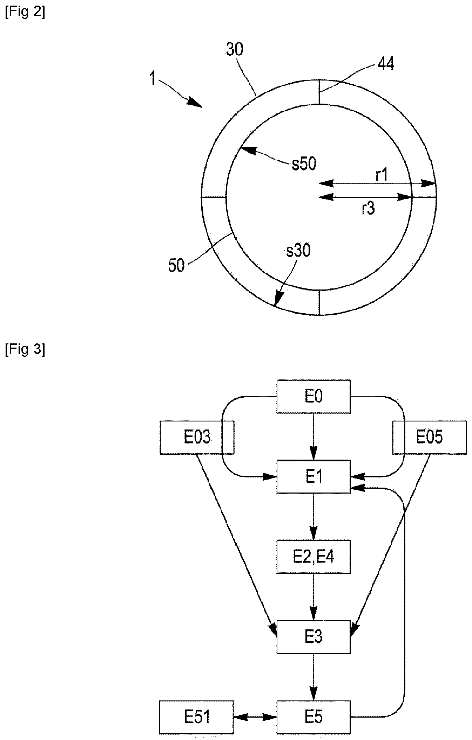

Referring now to figure 2, the main vessel 30 and the secondary wall 50 may be secured with each other via fixing elements 44. Advantageously, the fixing elements 44 are fixed between the main surface of degassing s30 and an external surface of the secondary wall 50. For example the fixing elements 44 comprise a plurality of spacers, such as fixing rods or vertical plates, which are including a heat-conducting material. The fixing elements 44 are configured to allow an exchange of calories between the main vessel 30 and the secondary wall 50. It is well understood that the fixing elements 44 allows to place the secondary volume at the degassing temperature when the main vessel 30 is heated by the heating unit 9. Advantageously, using fixing rods as fixing elements 44 allows to secure the secondary wall 50 with the main vessel 30 without disturbing too much the flow of initial viscous fluid along the main surface of degassing s30. Thus, it is possible to heat more quickly the main vessel 30 and the secondary wall 50, and especially the main surface of degassing s30 and the secondary surface of degassing s50 to improve degassing of the initial viscous fluid. Thus, it is possible to have a degassing device 1 showing improved robustness.

Referring back to figure 1, the degassing device comprises a main rotating plate 40 disposed inside the main volume, and being integral in rotation with the main shaft 10. Generally, the main rotating plate 40 is disposed above the secondary wall 50 compared to the direction of gravity. The main rotating plate 40 comprises a main reception surface s40 configured to receive all or part of the initial viscous fluid. The main rotating plate 40 is configured to eject by centrifugal force the initial viscous fluid from the main reception surface s40 to the main surface of degassing s30 when said main rotating plate 40 is driven in a rotational movement around the rotation axis X. Advantageously, the at least one main admission opening 31 of the main vessel 30 can comprise a first admission opening 33 coupled to a first admission pipe 34, said first admission pipe 34 being configured to introduce at least part of the initial viscous fluid at the main reception surface s40 of the main rotating plate 40. In order to receive the initial viscous fluid, the main reception surface s40 is generally directed in a direction opposite to that of universal gravity.

The degassing device comprises also a secondary rotating plate 60 disposed at least partially inside the secondary volume, and being integral in rotation with the main shaft 10. The secondary rotating plate 60 comprises a secondary reception surface s60 configured to receive all or part of the initial viscous fluid. The secondary rotating plate 60 is configured to eject by centrifugal force the initial viscous fluid from the secondary reception surface s60 to the secondary surface of degassing s50 when said secondary rotating plate 60 is driven in a rotational movement around the rotation axis X. According to one embodiment, the main rotating plate 40 is disposed above the secondary rotating plate 60 in the direction of universal gravity, and the secondary reception surface s60 is directed in a direction opposite to that of universal gravity. More particularly, it can be advantageous to have the secondary reception surface s60 parallel to the main reception surface s40. According to the variant illustrated on figure 1, the main rotating plate 40 and the secondary rotating plate 60 are a rotating discs. Using rotating disc allows to guarantee a uniform ejection of the viscous fluid from the main or secondary reception surface s60 to the main or secondary degassing surface by centrifugal force. The main rotating plate 40 can be a rotating disc presenting a main disc radius r2, which is strictly inferior to the main radius r1. Besides, the main disc radius r2 is generally strictly comprised between the main radius r1 and the secondary radius r3. The secondary rotating plate 60 can be a rotating disc presenting a secondary disc radius r4, said secondary disc radius r4 being strictly inferior to the main disc radius r2, and strictly inferior to the secondary radius r3. The radius configuration described above allows the initial viscous fluid to flow correctly inside the degassing device 1 so as to be efficiently degassed.

To facilitate the initial viscous fluid flow, the at least one main admission opening 31 of the main vessel 30 can also comprise a second admission opening 35 coupled to a second admission pipe 36, The second admission pipe 36 is then configured to introduce at least part of the initial viscous fluid at the secondary reception surface s60 of the secondary rotating plate 60. Advantageously, the first admission pipe 34 and the second admission pipe 36 allow introducing the viscous fluid respectively at the main rotating plate 40 and the secondary rotating plate 60 in order to increase the general flux of viscous fluid to be degassed by the degassing device 1. The overall output of the degassing device 1 is increased accordingly.

As it can be seen on figure 1, the main volume delimited by the main vessel 30 comprises a buffer volume, fluidly communicating with the secondary volume delimited by the secondary wall 50. The buffer volume corresponds to a volume disposed below the main surface of degassing s30 and the secondary surface of degassing s50 with respect with gravity, and is configured to receive the processed viscous fluid after the flowing of the initial viscous fluid along the main surface of degassing s30 or along the secondary surface of degassing s50. Thus, the buffer volume allows to recover a volume of processed viscous fluid. The degassing device 1 can include a level sensor 7 configured to determine the volume of processed viscous fluid present in the buffer volume. Thus, it is possible to manage the amount of processed viscous fluid. Advantageously, the degassing device 1 includes a stirring unit 70 disposed at the level of the buffer volume and configured to stir at least part of the processed viscous fluid present in the buffer volume. For example, the stirring unit 70 comprises stirring fins 71, preferably being integral in rotation with the main shaft 10.The arrangement described above allows to maintain the processed viscous fluid agitated. As a result, the processed viscous fluid can keep a homogeneous temperature, and can stay homogeneous, it is thus possible to prevent phenomena related to settling. Besides, agitating the processed viscous fluid allows most portions of said processed viscous fluid to reach the surface in orderto be exposed to the vacuum present in the main volume, allowing by this way to maintain a permanent degassing..

According to one embodiment, the main vessel 30 comprises an evacuation opening 83 disposed at the level of the buffer volume. The degassing device 1 may include further an extraction organ 80 presenting an extraction end, which is fluidly communicating with the evacuation opening 83. The extraction organ 80 is configured to allow the evacuation of the processed viscous fluid from the buffer volume to outside the main volume, notably to an external apparatus, for example to feed a low pressure dispensing machine for processing polyurethane or other thermoset polymers. For example, the extraction organ 80 is a pump configured to overcome the vacuum prevailing in the main vessel 30. As illustrated on figure 2, the extraction organ 80 can be fluidly communicating at an evacuation end, opposite to the extraction end, to a valve 81. The valve 81 can be switched or varied between an evacuation state where the valve 81 is configured to allow the evacuation of the processed viscous fluid to outside the degassing device 1, and a recirculation state where the valve 81 allows the processed viscous fluid to flow to the at least one main admission opening 31, so that the processed viscous fluid serves as initial viscous fluid.

According to a first variant, the valve 81 can be switched between the evacuation state and the recirculation state manually or by a control system. According to a second variant, the valve 81 can be a servo valve allowing to limit the inlet flow rate, notably when using an initial viscous fluid showing low viscosity, and to adapt the flow rate to the output demand compared to a valve presenting only open or close valve position. Advantageously, and as represented on figure 1, the degassing device 1 may include an inlet valve 82 configured to control the inlet flux of initial viscous fluid. For example, said inlet valve 82 can be a servo valve allowing to limit the inlet flow rate, notably when using an initial viscous fluid showing low viscosity. It is well understood that the valve 81, and the inlet valve 82 are both configured to control the inlet flux of initial viscous fluid entering the main volume. According to a third variant, the valve 81 comprises a pneumatic membrane or a spring. Thus, if an external pipe connected to the valve 81, and emerging to the outside of the degassing device 1 is closed, then the valve 81 is open, and ensures the recirculation of the processed viscous fluid towards to the admission opening. Otherwise, if said external pipe is open, then the valve 81 is closed under the pneumatic membrane or spring action and the processed viscous fluid is exhausted to the outside. In that case, the valve 81 does not require a control system, or a manual switch.

To perform the recirculation of the processed viscous fluid, the at least one main admission opening 31 may comprise at least one recirculation opening 38, 39 distinct or not from the first admission opening 33, and from the second admission opening 35. Thus the valve 81 may allow the processed viscous fluid to flow to the at least one recirculation opening 38, 39 when the valve 81 is in the recirculation state. As a result, the degassing device 1 allows to make several round of degassing by introducing successively the viscous fluid in the at least one main admission opening 31 via the recirculation openings 38, 39. Advantageously, the at least one recirculation opening 38, 39 includes a first recirculation opening 38 configured to bring the recirculated initial viscous fluid to the main rotating plate 40, and a second recirculation opening 39 configured to bring the recirculated initial viscous fluid to the main rotating plate 60. According to a variant where the degassing device comprises an inlet valve 82, the valve 81 and the inlet valve 82 may cooperate in order to tune and optimize the initial viscous fluid flux entering the main volume respectively by the first and second admission opening 33, 35, and the at least one recirculation opening 38, 39.

The invention is not limited to the embodiment represented on figure 1 and 2. It can indeed be implemented by a degassing comprising a plurality of secondary walls 50, and a plurality of secondary rotating plates 60. In this case, each secondary wall 50 of the plurality of secondary walls 50 can comprise a secondary surface of degassing s50 arranged around the main shaft 10 and disposed between the main surface of degassing s30 and the main shaft 10, and delimiting internally a secondary volume fluidly communicating with the main volume. Besides, each secondary rotating plate 60 of the plurality of secondary rotating plates 60 can be associated with one secondary wall 50 of the plurality of secondary walls 50 in a way that said secondary rotating plate 60 is disposed at least partially inside the secondary volume of the associated secondary wall 50. Moreover, each secondary rotating plate 60 of the plurality of secondary rotating plates 60 can be rotatably mounted on the main shaft 10, and being integral in rotation with the main shaft 10, and comprising a secondary reception surface s60 configured to receive all or part of the initial viscous fluid. Thus, each secondary rotating plate 60 of the plurality of secondary rotating plates 60 is configured to eject by centrifugal force the initial viscous fluid from the secondary reception surface s60 to the secondary surface of degassing s50 of the associated secondary wall 50 when said secondary rotating plate 60 is driven in a rotational movement around the axis of rotation. In other words, the plurality of secondary walls 50 are arranged one inside the other, so as to form trundle walls.

The arrangements described above allows to propose a degassing device 1 adapted to degas a viscous fluid with a much higher output capacity compared to a device showing similar external volume.

The invention also concerns a degassing method for extracting a gas from an initial viscous fluid, illustrated on figure 3.

The degassing method first comprises a step of providing E0 a degassing device 1 of the type of one of those previously described. The method can comprises a vacuum step E03, wherein the vacuum unit 5 places the main volume of the main vessel 30 under vacuum. For example, the vacuum step E03 is performed before or during a degassing step E3 which will be described later. The degassing method can also comprises a heating step E05, wherein the heating unit 9 heats the main vessel 30 at a degassing temperature, in order to place the main degassing surface at said degassing temperature. For example, the heating step E05 is performed before or during the degassing step E3.

Then, the degassing method comprises a step of providing E1 an initial viscous fluid at the level of the at least one main admission opening 31, in a way to allow to deposit all or part of the initial viscous fluid on the main reception surface s40 of the main rotating plate 40, and to deposit all or part of the initial viscous fluid on the secondary reception surface s60 of the secondary rotating plate 60. Generally, the initial viscous fluid is the only fluid inserted through the main admission opening 31. Thus, it is possible to avoid any chemical reaction of the initial viscous fluid with another fluid in the main volume of the main vessel 30.

The degassing method comprises further a step of rotating E2 the main shaft 10 around the rotation axis X so as to rotate both the main rotating plate 40 and the secondary rotating plate 60, in order to provoke the ejection by centrifugal force of the initial viscous fluid deposited on the main reception surface s40 from said main reception surface s40 to the main surface of degassing s30, and in order to provoke simultaneously the ejection by centrifugal force of the initial viscous fluid deposited on the secondary reception surface s60 from said secondary reception surface s60 to the secondary surface of degassing s50. For example, the step of rotating E2 the main shaft 10 is performed at a rotation speed comprised between 100 rpm and 1500 rpm, and more particularly between 100 rpm and 550 rpm.

According to one embodiment, the degassing method comprises a stirring step E4 wherein all or part of the processed viscous fluid is stirred, for example by a stirring unit 70. The step of rotating E2 the main shaft 10 can comprise the stirring step E2. In other words, the step of rotating E2 the main shaft 10 comprises rotating the main rotating plate 40, the secondary rotating plate 60, and the stirring unit 70 at the same time.

The degassing method further comprises a step of degassing E3 the initial viscous fluid by extracting a gas from the initial viscous fluid during the formation of at least one thin film 37, 57 of initial viscous fluid. The at least one thin film 37, 57 of initial viscous fluid is formed by flowing the initial viscous fluid by simple gravity along said main or secondary surface of degassing s30, s50, so as to form a processed viscous fluid.

Finally, the degassing method can comprise a step of recirculation E5, wherein the processed viscous fluid is received on a buffer volume included in the main volume, and wherein all or part of said processed viscous fluid received inside the buffer volume is brought from the buffer volume to the at least one main admission opening 31 in order to be provided as initial viscous fluid during the step of providing E1 the initial viscous fluid. In a particular embodiment wherein the main vessel 30 comprises an evacuation opening 83 configured to allow the evacuation of the processed viscous fluid from the buffer volume to outside the main volume, and wherein the evacuation opening 83 is provided with a servo valve 81, the step of recirculation E5 can comprise a flow control step E51, wherein the servo valve 81 is piloted so as to control a the flux of processed viscous fluid evacuated from the buffer volume to the extraction organ 80.

The arrangements described above allows to propose a degassing method adapted to degas a viscous fluid with a high output capacity.

## Claims

1. Degassing device (1) configured to extract a gas from an initial viscous fluid to be degassed, the degassing device (1) comprising:
- a main shaft (10) extending along a rotation axis (X) and configured to be rotated around said rotation axis (X);
- at least one movement actuator (3) ensuring a rotational movement of said main shaft (10) around the rotation axis (X);
- a main vessel (30) surrounding the main shaft (10), and comprising a main surface of degassing (s30) arranged around the main shaft (10) and facing the main shaft (10), the main vessel (30) delimiting internally a main volume, and comprising at least one main admission opening (31) configured to allow the initial viscous fluid to be introduced into the main volume from outside the main volume;
- a secondary wall (50) disposed inside the main vessel (30) and comprising a secondary surface of degassing (s50) arranged around the main shaft (10), the secondary wall (50) being disposed between the main surface of degassing (s30) and the main shaft (10), and the secondary surface of degassing (s50) facing the main shaft (10), the secondary wall (50) delimiting internally a secondary volume fluidly communicating with the rest of the main volume;
- a main rotating plate (40) disposed inside the main volume, and being integral in rotation with the main shaft (10), the main rotating plate (40) comprising a main reception surface (s40) configured to receive all or part of the initial viscous fluid, the main rotating plate (40) being configured to eject by centrifugal force the initial viscous fluid from the main reception surface (s40) to the main surface of degassing (s30) when said main rotating plate (40) is driven in a rotational movement around the rotation axis (X);
- a secondary rotating plate (60) disposed at least partially inside the secondary volume, and being integral in rotation with the main shaft (10), the secondary rotating plate (60) comprising a secondary reception surface (s60) configured to receive all or part of the initial viscous fluid, the secondary rotating plate (60) being configured to eject by centrifugal force the initial viscous fluid from the secondary reception surface (s60) to the secondary surface of degassing (s50) when said secondary rotating plate (60) is driven in a rotational movement around the rotation axis (X),
the main surface of degassing (s30) being configured to allow the formation of a main thin film (37) of initial viscous fluid when said initial viscous fluid flows by simple gravity along said main surface of degassing (s30), and
the secondary surface of degassing (s50) being configured to allow the formation of a secondary thin film (57) of initial viscous fluid when said initial viscous fluid flows by simple gravity along said secondary surface of degassing (s50),
said formation of the main thin film (37) of initial viscous fluid and said formation of the secondary thin film (57) of initial viscous fluid allowing the extraction of the gas from the initial viscous fluid, so as to form a processed viscous fluid.

2. Degassing device (1) according to claim 1, comprising a vacuum unit (5) configured to place the main volume of the main vessel (30) under vacuum.

3. Degassing device (1) according to any of the claims 1 or 2, wherein the at least one main admission opening (31) of the main vessel (30) comprises:
- a first admission opening (33) coupled to a first admission pipe (34), said first admission pipe (34) being configured to introduce at least part of the initial viscous fluid at the main reception surface (s40) of the main rotating plate (40); and
- a second admission opening (35) coupled to a second admission pipe (36), said second admission pipe (36) being configured to introduce at least part of the initial viscous fluid at the secondary reception surface (s60) of the secondary rotating plate (60).

4. Degassing device (1) according to any of the claims 1 to 3, wherein at least one surface chosen between the main surface of degassing (s30) and the secondary surface of degassing (s50) is in the form of all or part of a cylindrical surface.

5. Degassing device (1) according to any of the claims 1 to 4, wherein the main volume delimited by the main vessel (30) comprises a buffer volume, fluidly communicating with the secondary volume delimited by the secondary wall (50), said buffer volume corresponding to a volume disposed below the main surface of degassing (s30) and the secondary surface of degassing (s50) with respect with gravity, and being configured to receive the processed viscous fluid after the flowing of the initial viscous fluid along the main surface of degassing (s30) or along the secondary surface of degassing (s50).

6. Degassing device (1) according to claim 5, comprising a stirring unit (70) disposed at the level of the buffer volume and configured to stir at least part of the processed viscous fluid present in the buffer volume.

7. Degassing device (1) according to any of the claims 5 or 6, wherein the main vessel (30) comprises an evacuation opening (83) disposed at the level of the buffer volume, the degassing device (1) comprising further an extraction organ (80) presenting an extraction end, said extraction end being fluidly communicating with the evacuation opening (83), said extraction organ (80) being configured to allow the evacuation of the processed viscous fluid from the buffer volume to outside the main volume.

8. Degassing device (1) according to claim 7, wherein the extraction organ (80) is fluidly communicating at an evacuation end opposite to the extraction end to a valve (81), said valve (81) being configured to be switched between an evacuation state where the valve (81) is configured to allow the evacuation of the processed viscous fluid to outside the degassing device (1), and a recirculation state where the valve (81) allows the processed viscous fluid to flow to the at least one main admission opening (31), so that the processed viscous fluid serves as initial viscous fluid.

9. Degassing device (1) according to claims 3 and 8, wherein the at least one main admission opening (31) comprises at least one recirculation opening (38, 39) distinct from the first admission opening (33), and from the second admission opening (35), the valve (81) being configured to allow the processed viscous fluid to flow to the at least one recirculation opening (38, 39) when the valve (81) is in the recirculation state.

10. Degassing device (1) according to any of the claims 1 to 9, comprising a heating unit (9) configured to heat the main vessel (30) at a degassing temperature, in order to place the main degassing surface at said degassing temperature.

11. Degassing device (1) according to any of the claims 1 to 10, wherein the main vessel (30) and the secondary wall (50) are secured with each other via fixing elements (44), wherein the fixing elements (44) preferably comprise a plurality of spacers including a heat-conducting material, the fixing elements (44) preferably being configured to allow an exchange of calories between the main vessel (30) and the secondary wall (50).

12. Degassing device (1) according to any of the claims 1 to 11, comprising a plurality of secondary walls (50), and a plurality of secondary rotating plates (60), each secondary wall (50) of the plurality of secondary walls (50) comprising a secondary surface of degassing (s50) arranged around the main shaft (10) and disposed between the main surface of degassing (s30) and the main shaft (10), and delimiting internally a secondary volume fluidly communicating with the main volume; and
each secondary rotating plate (60) of the plurality of secondary rotating plates (60) being associated with one secondary wall (50) of the plurality of secondary walls (50) in a way that said secondary rotating plate (60) is disposed at least partially inside the secondary volume of the associated secondary wall (50),
each secondary rotating plate (60) of the plurality of secondary rotating plates (60) being rotatably mounted on the main shaft (10), and being integral in rotation with the main shaft (10), and comprising a secondary reception surface (s60) configured to receive all or part of the initial viscous fluid,
each secondary rotating plate (60) of the plurality of secondary rotating plates (60) being configured to eject by centrifugal force the initial viscous fluid from the secondary reception surface (s60) to the secondary surface of degassing (s50) of the associated secondary wall (50) when said secondary rotating plate (60) is driven in a rotational movement around the axis of rotation.

13. Degassing method for extracting a gas from an initial viscous fluid, the method comprising the steps of:
- providing (E0) a degassing device (1) according to any of the claims 1 to 12;
- providing (E1) an initial viscous fluid at the level of the at least one main admission opening (31), in a way to allow to deposit all or part of the initial viscous fluid on the main reception surface (s40) of the main rotating plate (40), and to deposit all or part of the initial viscous fluid on the secondary reception surface (s60) of the secondary rotating plate (60);
- rotating (E2) the main shaft (10) around the rotation axis (X) so as to rotate both the main rotating plate (40) and the secondary rotating plate (60), in order to provoke the ejection by centrifugal force of the initial viscous fluid deposited on the main reception surface (s40) from said main reception surface (s40) to the main surface of degassing (s30), and in order to provoke simultaneously the ejection by centrifugal force of the initial viscous fluid deposited on the secondary reception surface (s60) from said secondary reception surface (s60) to the secondary surface of degassing (s50);
- degassing (E3) the initial viscous fluid by extracting a gas from the initial viscous fluid during the formation of at least one thin film (37, 57) of initial viscous fluid, said at least one thin film (37, 57) of initial viscous fluid being formed by flowing the initial viscous fluid by simple gravity along said main or secondary surface of degassing (s30, s50), so as to form a processed viscous fluid.

14. Degassing method according to claim 13, comprising further a step of recirculation (E5), wherein the processed viscous fluid is received on a buffer volume included in the main volume, and wherein all or part of said processed viscous fluid received inside the buffer volume is brought from the buffer volume to the at least one main admission opening (31) in order to be provided as initial viscous fluid during the step of providing (E1) the initial viscous fluid.

15. Degassing method according to claim 13 or 14, wherein the initial viscous fluid comprises an thermoset plastic component, preferentially a polyurethane elastomer component.
